(19) **Europäisches Patentamt**
**European Patent Office**
**Office européen des brevets**

(11) **EP 2 385 674 B1**

(12) **EUROPEAN PATENT SPECIFICATION**

(45) Date of publication and mention
of the grant of the patent:
**19.08.2015 Bulletin 2015/34**

(51) Int Cl.:
*H04L 27/36* (2006.01)    *G01S 7/38* (2006.01)

(21) Application number: **10193613.6**

(22) Date of filing: **03.12.2010**

(54) **Signal processing apparatus and method thereof**

Signalverarbeitungsvorrichtung und Verfahren dafür

Appareil de traitement de signal et procédé associé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.05.2010 KR 20100043071**

(43) Date of publication of application:
**09.11.2011 Bulletin 2011/45**

(73) Proprietor: **LIG Nex1 CO, Ltd.**
**Gangnam-gu, Seoul 135-080 (KR)**

(72) Inventors:
• **Shin, Kyu Shik**
**Gyeonggi-do 446-716 (KR)**
• **Lee, Wang Yong**
**Gyeonggi-do 446-716 (KR)**

(74) Representative: **Capasso, Olga et al**
**De Simone & Partners S.p.A.**
**Via Vincenzo Bellini, 20**
**00198 Roma (IT)**

(56) References cited:
**EP-A1- 0 568 056    US-A- 5 001 727**
**US-B1- 6 624 780**

• **KWAK C M: "Application of DRFM in ECM for pulse type radar", INFRARED, MILLIMETER, AND TERAHERTZ WAVES, 2009. IRMMW-THZ 2009. 34TH INTERNATIONAL CONFERENCE ON, IEEE, PISCATAWAY, NJ, USA, 21 September 2009 (2009-09-21), pages 1-2, XP031562580, ISBN: 978-1-4244-5416-7**

Printed by Jouve, 75001 PARIS (FR)

**Description**

BACKGROUND OF THE INVENTION

1. Field of the Invention

The present invention relates to a signal processing apparatus and a method thereof that can convert amplitude sampling data outputted from an analog/digital converter into phase data and converts the phase data into amplitude data at high speed.

2. Description of the Related Art

In general, in a radio frequency (RF) communication field, a module that converts amplitude data into phase data and converts the phase data into the amplitude data within a programmable logic gate (PLD) are used and for example, include a coordinate rotational digital computer (CORDIC) module.
The CORDIC module has a disadvantage in that the number of outputted bits is in proportion to the number of processed bits and when a minimum output is 8 bits, 12 clocks are used as a minimum processing clock. Further, since the CORDIC module implemented within the PLD requires a dividing operation at the time of calculation using a logic circuit, high-speed processing is impossible.
US 6,624,780 discloses a signal processing apparatus, comprising: a phase sampling digital radio frequency memory (DRFM) storing the phase data outputted from the phase shifter, an amplitude converter including an amplitude conversion lookup table that converts all phase data outputtable from the phase shifter into amplitude values and approximates the amplitude values into second approximate integers, and converts the second approximate integers into amplitude data and a D/A converter converting the amplitude data outputted from the amplitude converter into a in phase frequency signal and a quadrature frequency signal.
US 5,001,727 discloses a method and apparatus for demodulating a phase modulated carrier and a phase/amplitude modulated carrier. The system first receives a phase modulated carrier with the phase modulated carrier operating at first frequency. A local carrier clock is then generated and operating at a second frequency. The second frequency is proximate in frequency to the first frequency. The phase difference between the phase modulated carrier and the local carrier clock is then determined which provides a composite phase signal.

SUMMARY OF THE INVENTION

The present invention has been made in an effort to provide a signal processing apparatus and a method thereof that can convert amplitude sampling data into phase data and converts the phase data into amplitude data at high speed.
The invention is defined by the appended claims.
According to exemplary embodiments of the present invention, it can convert amplitude sampling data outputted from an analog/digital converter into phase data and converts the phase data into amplitude data at high speed, it can be effectively used to apply to a system (i.e., a digital RF memory) that is sensitive to speed.

BRIEF DESCRIPTION OF THE DRAWINGS

FIG. 1 is a block diagram illustrating a signal processing apparatus according to a first exemplary embodiment of the present invention;
FIG. 2 is a table illustrating one example of a phase shift lookup table of FIG. 1;
FIG. 3 is a table illustrating phase data depending on a phase value in the phase shift lookup table of FIG. 2;
FIG. 4 illustrates one example in which phase data is converted into amplitude data by an amplitude converter of FIG. 1 and the left figure is a diagram in which the phase data is displayed on a polar coordinate and the right figure is a diagram in which the amplitude data is displayed on a coordinate;
FIG. 5 is a table illustrating one example of an amplitude conversion lookup table of FIG. 1;
FIG. 6 is a table illustrating an I digital value and a Q digital value depending on an approximate I and an approximate Q in the amplitude conversion lookup table of FIG. 5;
FIG. 7 is a graph for describing the mutual relationship between a phase shifting process of a signal inputted into the signal processing apparatus of FIG. 1 and an amplitude converting process of a phase signal; and
FIG. 8 is a block diagram illustrating a signal processing apparatus according to a second exemplary embodiment of the present invention.

DETAILED DESCRIPTION OF THE EMBODIMENTS

Hereinafter, a signal processing apparatus according to exemplary embodiments of the present invention will be described with reference to the accompanying drawings.

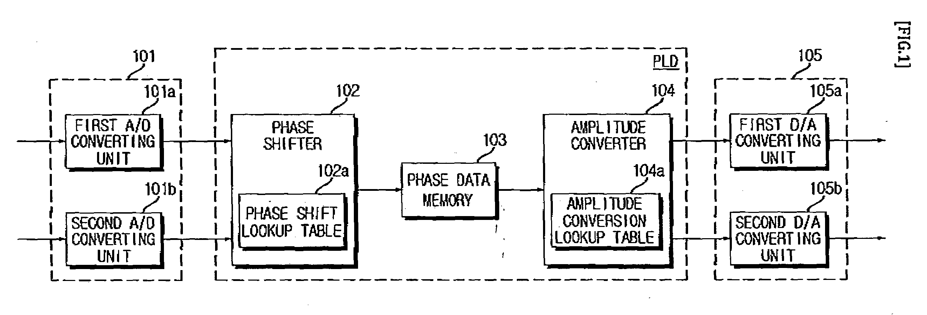

As shown in FIG. 1, a signal processing apparatus according to a first exemplary embodiment of the present invention includes an A/D (analog to digital) converter 101 converting an inphase frequency signal and a quadrature frequency signal into amplitude sampling data including digital inphase data and digital quadrature data; a phase shifter 102 including a phase shift lookup table 102a that converts all amplitude sampling data outputtable from the A/D converter 101 into phase values and approximates the phase values into first approximate integers, and thereafter, converts first approximate integers into phase data of predetermined bits and stores the phase data, and converting the amplitude sampling data inputted from the A/D converter 101 into the phase data by referring to the phase shift lookup table 102a; a phase data memory 103 storing the phase data outputted from the phase shifter 102; an amplitude converter 104 including an amplitude conversion lookup table 104a that converts all phase data outputtable from the phase shifter 102 into amplitude values and approximates the amplitude values into second approximate integers, and converts the second approximate integers into amplitude data including digital inphase data and digital quadrature data and stores the amplitude data, and converting the phase data stored in the phase data memory 103 into amplitude data by referring to the amplitude conversion lookup table 104a; and a D/A converter 105 converting the amplitude data outputted from the amplitude converter 104 into an inphase frequency signal and a quadrature frequency signal.

Components of the signal processing apparatus according to the exemplary embodiment of the present invention having the above-mentioned structure will now be described in detail.

Referring to FIG. 1, the A/D converter 101 converts and outputs an inphase (I) frequency signal and a quadrature (Q) frequency signal into amplitude sampling data including digital inphase data and digital quadrature data.

The A/D converter 101 includes a first A/D converting unit 101a converting the inphase frequency signal into the digital inphase data and a second A/D converting unit 101b converting the quadrature frequency signal into the digital quadrature data.

The digital inphase data I(n) outputted from the first A/D converting unit 101a is expressed by Equation 1 and the digital quadrature data Q(n) outputted from the second A/D converting unit 101b is expressed by Equation 2.

$$[\text{Equation 1}]$$

$$I(n) = A\cos(2\pi f t_s + \varphi)$$

$$[\text{Equation 2}]$$

$$Q(n) = A\sin(2\pi f t_s + \varphi)$$

The phase converter 102 receives amplitude sampling data outputted from the A/D converter 101, i.e., the digital inphase data I(n) and the digital quadrature data Q(n) and converts the inputted amplitude sampling data into phase data by referring to the phase shift lookup table 102a.

The phase shift lookup table 102a included in the phase shifter 102 converts all the amplitude sampling data outputtable from the A/D converter 102 into phase values and approximates the phase values into the first approximate integers, and thereafter, converts the first approximate integers into phase data of predetermined bits and stores the phase data.

The phase shift lookup table 102a uses each of the amplitude sampling data including the digital inphase data I(n) and the digital quadrature data Q(n) as a storage address and stores phase data corresponding to each storage address.

In addition, phase values of the phase shift lookup table 102a are determined by Equation 3.

$$[\text{Equation 3}]$$

$$\theta(n) = \tan^{-1}\left(\frac{Q(n)}{I(n)}\right)$$

In Equation 3, $\theta(n)$ represents the phase value, $I(n)$ represents the digital inphase data of the amplitude sampling data, and $Q(n)$ represents the digital quadrature data of the amplitude sampling data.

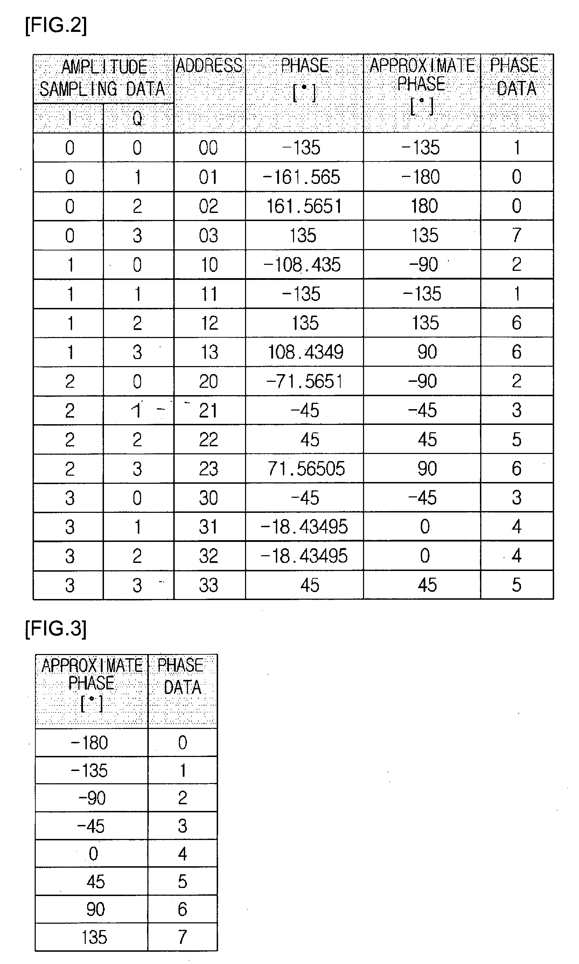

FIG. 2 illustrates one example of the phase shift lookup table 102a and FIG. 3 additionally illustrates phase data depending on an approximate phase value in the phase shift lookup table 102a of FIG. 2. One example of the phase shift lookup table 102a will be described in detail with reference to FIGS. 2 and 3.

Referring to FIG. 2, for example, the phase shift lookup table 102a may be generated by arranging all the amplitude sampling data outputtable from the A/D converter 101 and using each amplitude sampling data as the storage address and expressing the phase value $\theta(n)$ which is a result calculated by inputting the digital inphase data $I(n)$ and the digital quadrature data $Q(n)$ of each amplitude sampling data into Equation 3 as the most approximate value (i.e., the approximate phase value) among the approximate phase values of FIG. 3 and thereafter, expressing and storing the approximate phase value as the phase data by referring to FIG. 3. In this case, a gap between the approximate phase values of FIGS. 2 and 3 may be determined according to the number of bits of the phase data.

Referring to FIG. 1, the phase data outputted from the phase shifter 102 including the phase shift lookup table 102a is stored in the phase data memory 103.

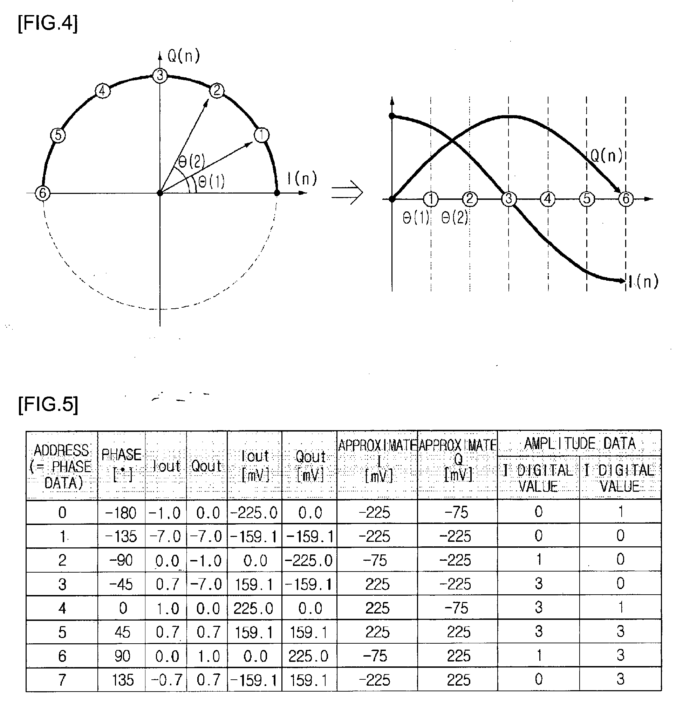

In addition, the amplitude converter 104 converts the phase data stored in the phase data memory 103, which is shown in a coordinate at the left side of FIG. 4 into amplitude data shown in a polar coordinate at the right side of FIG. 4 by referring to the amplitude conversion lookup table 104a.

The amplitude conversion lookup table 104a included in the amplitude converter 104 converts all phase data outputtable from the phase data memory into amplitude values and approximate the amplitude values into the second approximate integers, and thereafter, converts the second approximate integers into amplitude data of predetermined bits including the digital inphase data and the digital quadrature data and stores the amplitude data.

The amplitude conversion lookup table 104a uses each of the phase data storable in the phase data memory 103 as the storage address and stores amplitude data corresponding to each storage address.

In addition, the amplitude values of the amplitude conversion lookup table 104a include inphase values and quadrature values. The inphase values $Iout(n)$ are determined by Equation 4 and the quadrature values $Qout(n)$ are determined by Equation 5 among the amplitude values.

$$[\text{Equation 4}]$$

$$Iout(n) = A(n)\cos(\theta(n))$$

$$[\text{Equation 5}]$$

$$Qout(n) = A(n)\sin(\theta(n))$$

In Equations 4 and 5, $A(n)$ is preferably processed as a fixed value. The reason is that a signal is distorted through the signal processing apparatus according to the exemplary embodiment of the present invention and amplitude imbalance of the signal thus occurs, but in the exemplary embodiment of the present invention, since amplitude information is not used at the time of converting and restoring the phase data into the amplitude data, the amplitude imbalance is removed by processing $A(n)$ as the fixed value.

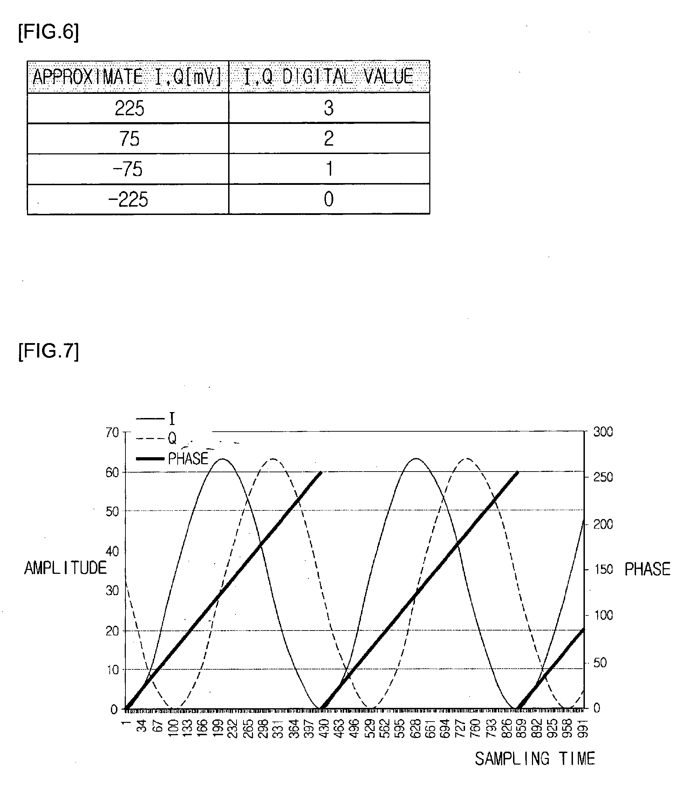

FIG. 5 illustrates one example of the amplitude conversion lookup table 104a and FIG. 6 additionally illustrates amplitude data depending on an approximate I value and an approximate Q value in the amplitude conversion lookup table 104a of FIG. 5. One example of the amplitude conversion lookup table 104a will be described in detail with reference to FIGS. 5 and 6.

Referring to FIG. 5, for example, the amplitude conversion lookup table 104a may be generated by arranging all the phase data outputtable from the phase data memory 103 and using each phase data as the storage address, inputting the approximate phase value corresponding to each phase data by referring to FIG. 3 into Equations 4 and 5 by referring to FIG. 3 used at the time of generating the phase shift lookup table 102a and multiplying the inphase value $Iout(n)$ and the quadrature $Qout(n)$ which are calculated by assuming $A(n)$ as 1 by an actual value of $A(n)$ and expressing the multiplication result in the unit of [mV] and thereafter, expressing it the most approximate values (i.e., approximate I value and approximate Q value) among the approximate I and Q values of FIG. 6, and expressing and storing the approximate I value and the approximate Q value as an I digital value (i.e., digital inphase data) and a Q digital value (i.e., digital quadrature data), that is, the amplitude data by referring to FIG. 6. In this case, a gap between the approximate I and Q values of FIGS. 5 and 6 may be determined according to the number of bits of the amplitude data (I and Q digital values).

Referring to FIG. 1, the amplitude data outputted from the amplitude converter 104 including the amplitude conversion lookup table 104a is inputted into the D/A converter 105 and the D/A converter 105 converts and outputs the inputted amplitude data into the inphase frequency signal and the quadrature frequency signal.

The D/A converter 105 includes a first D/A converting unit 105a converting the digital inphase data of the amplitude data into the inphase frequency signal and a second D/A converting unit 105b converting the digital quadrature data of the amplitude data into the quadrature frequency signal.

The amplitude sampling data is converted into the phase data and the phase data is converted into the amplitude data by the signal processing apparatus according to the first exemplary embodiment of the present invention having the above-mentioned structure.

FIG. 7 is a graph illustrating the mutual relationship between a phase shifting process of a signal inputted into the signal processing apparatus according to the exemplary embodiment of the present invention and an amplitude converting process of a phase signal. Referring to FIG. 7, when sine wave type amplitude sampling data is converted by using the approximate phase value stored in the phase shift lookup table, a phase may be expressed in a straight line type and when the straight line type approximate phase value is converted by using the approximate I and Q values stored in the amplitude conversion lookup table, an amplitude may be expressed in a sine wave type. For example, when the approximate I value is 45 and the approximate Q value is 2, the approximate phase value is converted into 80° and when the approximate phase value is 80°, the approximate I value and the approximate Q value are converted into 45 and 2, respectively. As such, when the approximate I and Q values and the approximate phase value are mutually converted into each other, they correspond to each other one to one, as a result, an error due to ambiguity may not occur while they are converted into each other.

In the signal processing apparatus according to the first exemplary embodiment of the present invention, a phase difference between the digital inphase data and the digital quadrature data which are the outputs of the first and second A/D converting units 101a and 101b is preferably 90°, but a phase error may occur due to imbalance having a phase difference other than 90°. Therefore, in the present invention, a second exemplary embodiment in which phase data without the phase error is stored in the phase data memory and amplitude data corresponding to the phase data without the phase error is stored in the amplitude conversion lookup table may be configured.

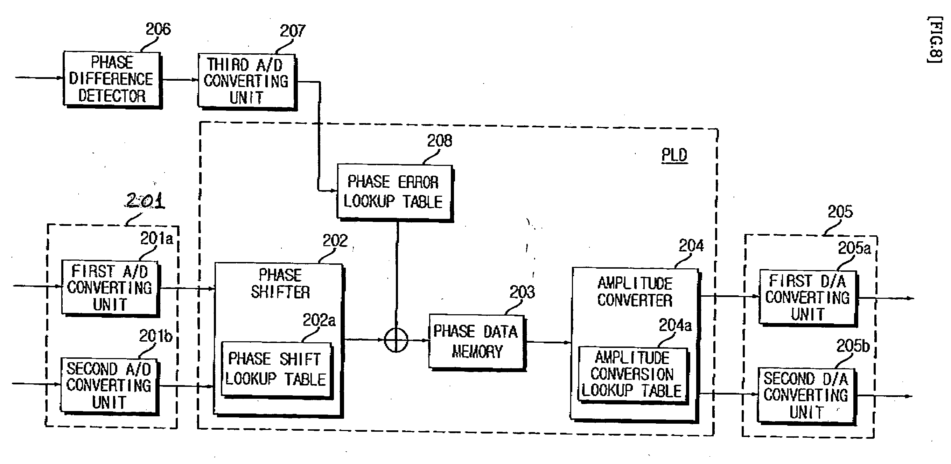

FIG. 8 illustrates a signal processing apparatus according to a second exemplary embodiment of the present invention.

As shown in FIG. 8, the signal processing apparatus according to the second exemplary embodiment of the present invention includes an A/D (analog to digital) converter 201 converting an inphase frequency signal and a quadrature frequency signal into amplitude sampling data including digital inphase data and digital quadrature data; a phase shifter 202 including a phase shift lookup table 202a that converts all amplitude sampling data outputtable from the A/D converter 201 into phase values and approximates the phase values into first approximate integers, and thereafter, converts the approximate integers into phase data of predetermined bits and stores the phase data, and converting the amplitude sampling data inputted from the A/D converter 201 into the phase data by referring to the phase shift lookup table 202a; a phase data memory 203 storing the phase data outputted from the phase shifter 202; an amplitude converter 204 including an amplitude conversion lookup table 204a that converts all phase data outputtable from the phase shifter 202 into amplitude values and approximates the amplitude values into second approximate integers, and converts the second approximate integers into amplitude data including digital in-phase data and digital quadrature data and stores the amplitude data, and converting the phase data stored in the phase data memory 203 into amplitude data by referring to the amplitude conversion lookup table 204a; and a D/A converter 205 converting the amplitude data outputted from the amplitude converter 204 into an in-phase frequency signal and a quadrature frequency signal.

Further, in order to store phase data without a phase error depending on a phase difference between the inphase frequency signal and the quadrature frequency signal in the phase data memory, the signal processing apparatus according to the second exemplary embodiment of the present invention further includes: a phase difference detector 206 receiving the inphase frequency signal and the quadrature frequency signal inputted into the A/D converter 201 and outputting an output voltage which is in proportion to the phase difference between the inphase frequency signal and the quadrature frequency signal; a third A/D converter 207 converting and outputting the phase difference outputted from the phase difference detector 206 into a digital phase difference; and a phase error lookup table 208 storing a phase error depending on the digital phase difference outputted from the third A/D converter 207. As a result, the phase data stored in the phase data memory 203 includes the phase error.

An appropriate equation for the phase error is preferably deduced through measurement after actually manufacturing the signal processing apparatus according to the second exemplary embodiment of the present invention and one example of the phase error (phase_error(n)) is shown in Equation 6.

[Equation 6]

$$\text{phase\_error}(n) = (\cos(\varphi) - 1)\cos(2\pi f n t_s) - (\sin(\varphi))\sin(2\pi f n t_s)$$

The signal processing apparatus according to the second exemplary embodiment of the present invention having the above-mentioned structure is the same as the signal processing apparatus according to the first exemplary embodiment of the present invention except that the phase data without the phase error is stored in the phase data memory 203 and the amplitude data corresponding to the phase data without the phase error is stored in the amplitude conversion lookup table 204a. Therefore, a detailed description of the signal processing apparatus according to the second exemplary embodiment will be omitted.

Hereinafter, a signal processing method according to a first exemplary embodiment of the present invention will be described below.

First, an A/D converter 101 converts an inphase frequency signal and a quadrature frequency signal into amplitude sampling data including digital inphase data and digital quadrature data. In this case, the A/D converter 101 includes a first A/D converting unit 101a converting the inphase frequency signal into the digital inphase data and a second A/D converting unit 101b converting the quadrature frequency signal into the digital quadrature data.

The digital inphase data outputted from the first A/D converting unit 101a is expressed by Equation 1 and the digital quadrature data outputted from the second A/D converting unit 101b is expressed by Equation 2.

Next, the phase converter 102 converts the amplitude sampling data into phase data by referring to a phase shift lookup table 102a that converts all amplitude sampling data outputtable from the A/D converter 101 into phase values and approximates the phase values into first approximate integers, and thereafter, converts the first approximate integers into phase data of predetermined bits and stores the phase data.

In addition, the phase shift lookup table 102a uses each of the amplitude sampling data including the digital inphase data and the digital quadrature data as a storage address and stores phase data corresponding to each storage address.

In addition, phase values of the phase shift lookup table 102a are determined by Equation 3.

Next, the phase data memory 103 receives and stores the phase data outputted from the phase converter 102.

Next, an amplitude converter 104 converts the phase data from the phase data memory 103 into the amplitude data by using an amplitude conversion lookup table 104a that converts all phase data outputtable from the phase converter 102 into amplitude values and approximates the amplitude values into second approximate integers, and thereafter, converts the second approximate integers into amplitude data of predetermined bits including the digital inphase data and the digital quadrature data and stores the amplitude data.

The amplitude conversion lookup table 104a uses each of the phase data outputtable from the phase converter 102 as the storage address and stores amplitude data corresponding to each storage address.

In addition, the amplitude values of the amplitude conversion lookup table 104a include inphase values and quadrature values. The inphase values are determined by Equation 4 and the quadrature values are determined by Equation 5 among the amplitude values.

Next, a D/A converter 105 receives and converts the amplitude data outputted from the amplitude converter 104 into the inphase frequency signal and the quadrature frequency signal.

The D/A converter 105 includes a first D/A converting unit 105a converting the digital inphase data of the amplitude data into the inphase frequency signal and a second D/A converting unit 105b converting the digital quadrature data of the amplitude data into the quadrature frequency signal.

In performing the signal processing method according to the first exemplary embodiment of the present invention including the plurality of steps, a phase difference between the digital inphase data and the digital quadrature data which are the outputs of the first and second A/D converting units 101a and 101b is preferably 90°, but a phase error may occur due to imbalance having a phase difference other than 90°. Therefore, in the present invention, a second exemplary embodiment used after phase data without the phase error is stored in the phase data memory and amplitude data corresponding to the phase data without the phase error is stored in the amplitude conversion lookup table may be configured.

The signal processing method according to the second exemplary embodiment of the present invention includes outputting a phase difference between the inphase frequency signal and the quadrature frequency signal by receiving the inphase frequency signal and the quadrature frequency signal for converting the amplitude sampling data, converting and outputting the phase difference into a digital phase difference, and acquiring a phase error depending on the digital phase difference, before storing the phase data in the phase data memory in the signal processing method according to the first exemplary embodiment of the present invention. A phase data value including the phase error is stored at the storing of the phase data in the phase data memory.

A signal processing method according to a second exemplary embodiment of the present invention is the same as the signal processing method according to the first exemplary embodiment except for the above-mentioned related matters. Therefore, a detailed description thereof will be omitted.

Accordingly, the exemplary embodiments disclosed in the present invention and the accompanying drawings are used not to limit but to describe the present invention. The protection scope of the present invention must be analyzed by the appended claims.

**Claims**

1.  A signal processing apparatus, comprising:

    an A/D, analog to digital, converter (201) converting an inphase frequency signal and a quadrature frequency signal into amplitude sampling data including digital inphase data and digital quadrature data;

    a phase shifter (202) including a phase shift lookup table (202a) that converts all amplitude sampling data outputtable from the A/D converter (201) into phase values and approximates the phase values into first approximate integers, and thereafter, converts the first approximate integers into phase data of predetermined bits and stores the phase data, and converting the amplitude sampling data inputted from the A/D converter into the phase data by referring to the phase shift lookup table (202a);

    a phase difference detector (206) receiving the inphase frequency signal and the quadrature frequency signal inputted into the A/D converter (201) and outputting the phase difference between the inphase frequency signal and the quadrature frequency signal;

    a second A/D converter (207) converting and outputting the phase difference outputted from the phase difference detector (206) into a digital phase difference; and

    a phase error lookup table (208) storing a phase error depending on the digital phase difference outputted from the second A/D converter (207),

    a phase data memory (203) storing the phase data outputted from the phase shifter (202) wherein the phase data stored in the phase data memory (203) includes the phase error;

    an amplitude converter (204) including an amplitude conversion lookup table (204a) that converts all phase data outputtable from the phase shifter (202) into amplitude values and approximates the amplitude values into second approximate integers, and converts the second approximate integers into amplitude data including digital inphase data and digital quadrature data and stores the amplitude data, and converting the phase data stored in the phase data memory (203) into amplitude data by referring to the amplitude conversion lookup table (204a); and

    a D/A converter (205) converting the amplitude data outputted from the amplitude converter into an inphase frequency signal and a quadrature frequency signal.

2.  The apparatus of claim 1, wherein a gap between the first approximate integers stored in the phase shift lookup table (202a) is determined depending on the number of bits of the phase data.

3.  The apparatus of claim 1, wherein the phase shift lookup table (202a) uses the amplitude sampling data including the digital inphase data and the digital quadrature data as a storage address.

4.  The apparatus of claim 1, wherein in the phase shift lookup table (202a), a phase value θ(n) is determined by

    $$\theta(n) = \tan^{-1}\left(\frac{Q(n)}{I(n)}\right)$$ wherein I(n) represents the digital inphase data of the amplitude sampling data and Q(n) represents the digital quadrature data of the amplitude sampling data.

5.  The apparatus of claim 1, wherein in the amplitude conversion lookup table (204a), an amplitude value includes an inphase value I(n) and a quadrature value Q(n) and the phase data is converted into amplitude values I(n) and Q(n) by I(n)=A(n)cos(θ(n)) and Q(n)=A(n)sin(θ(n)).

6.  The apparatus of claim 5, wherein A(n) is set to a fixed value.

7.  The apparatus of claim 1, wherein a gap between the second approximate integers stored in the amplitude conversion lookup table (204a) is determined depending on the number of bits of the amplitude data.

8.  The apparatus of claim 1, wherein the amplitude conversion lookup table (204a) uses the phase data outputtable from the phase shifter (202) as a storage address.

9.  The apparatus of claim 1, wherein an output voltage of the phase difference detector (206) is in proportion to a phase difference between the inphase frequency signal and the quadrature frequency signal.

10. A signal processing method, comprising:

converting by an A/D converter an inphase frequency signal and a quadrature frequency signal into amplitude sampling data including digital inphase data and digital quadrature data;

converting the amplitude sampling data inputted from the A/D converter (201) into phase data by referring to a phase shift lookup tabled (202a) that converts all amplitude sampling data outputtable from the A/D converter into phase values and approximates the phase values into first approximate integers, and thereafter, converts the first approximate integers into phase data of predetermined bits and stores the phase data;

storing the phase data in a phase data memory (203);

converting the phase data stored in the phase data memory (203) into amplitude data by using an amplitude conversion lookup table (204a) that converts all phase data outputtable from the phase shifter into amplitude values and approximates the amplitude values into second approximate integers, and converts the second approximate integers into amplitude data including digital inphase data and digital quadrature data and stores the amplitude data; and

converting the amplitude data into an inphase frequency signal and a quadrature frequency signal wherein said method further comprises before storing the phase data in the phase data memory (203).

outputting a phase difference between the inphase frequency signal and the quadrature frequency signal by receiving the inphase frequency signal and the quadrature frequency signal for converting the amplitude sampling data;

converting and outputting the phase difference into a digital phase difference; and

acquiring a phase error depending on the digital phase difference,

wherein a phase data value including the phase error is stored at the storing of the phase data.

## Patentansprüche

1. Signalverarbeitungsvorrichtung, aufweisend:

    einen A/D-, Analog-Digital-Wandler (201), der ein Inphase-Frequenzsignal und ein Quadratur-Frequenzsignal in Amplituden-Abtast-Daten einschließlich digitaler Inphase-Daten und digitaler Quadratur-Daten umwandelt;

    einen Phasenschieber (202), mit einer Phasenverschiebungs-Lookup-Tabelle (202a), der alle vom A/D-Wandler (201) ausgebbaren Amplituden-Abtast-Daten in Phasenwerte umwandelt und die Phasenwerte in erste approximierte Ganzzahlen approximiert, und danach die ersten approximierten Ganzzahlen in Phasendaten von im Voraus bestimmten Bits umwandelt und die Phasendaten speichert, und die vom A/D-Wandler eingegebenen durch Bezugnahme auf die Phasenverschiebungs-Lookup-Tabelle (202a) in die Phasendaten umwandelt;

    eine Phasendifferenzdetektionsvorrichtung (206), die das in den A/D-Wandler (201) eingegebene Inphase-Frequenzsignal und das Quadratur-Frequenzsignal empfängt und die die Phasendifferenz zwischen dem Inphase-Frequenzsignal und dem Quadratur-Frequenzsignal ausgibt;

    einen zweiten A/D-Wandler (207), der die von der Phasendifferenzdetektionsvorrichtung (206) ausgegebene Phasendifferenz in eine digitale Phasendifferenz umwandelt und ausgibt; und

    eine Phasenfehler-Lookup-Tabelle (208), die einen Phasenfehler abhängig von der vom zweiten A/D-Wandler (207) ausgegebenen digitalen Phasendifferenz speichert,

    einen Phasendatenspeicher (203), der die vom Phasenschieber (202) ausgegebenen Phasendaten speichert, wobei die im Phasendatenspeicher (203) gespeicherten Phasendaten den Phasenfehler umfassen;

    einen Amplituden-Wandler (204), aufweisend eine Amplituden-Wandlungs-Lookup-Tabelle (204a), der alle vom Phasenschieber (202) ausgebbaren Phasendaten in Amplitudenwerte umwandelt und die Amplitudenwerte in zweite approximierte Ganzzahlen approximiert, und die zweiten approximierten Ganzzahlen in Amplitudendaten einschließlich digitaler Inphase-Daten und digitaler Quadratur-Daten umwandelt und die Amplitudendaten speichert, und die im Phasendatenspeicher (203) gespeicherten Amplitudendaten durch Bezugnahme auf die Amplituden-Wandlungs-Lookup-Tabelle (204a) in Amplitudendaten umwandelt; und

    einen D/A-Wandler (205), der die vom Amplituden-Wandler ausgegebenen Amplitudendaten in ein Inphase-Frequenzsignal und ein Quadratur-Frequenzsignal umwandelt.

2. Vorrichtung nach Anspruch 1, wobei ein Zwischenraum zwischen den ersten approximierten Ganzzahlen, die in der Phasenverschiebungs-Lookup-Tabelle (202a) gespeichert sind, in Abhängigkeit von der Anzahl Bits der Phasendaten bestimmt ist.

3. Vorrichtung nach Anspruch 1, wobei die Phasenverschiebungs-Lookup-Tabelle (202a) die Amplituden-Abtast-Daten einschließlich des Inphase-Frequenzsignals und des Quadratur-Frequenzsignals als eine Speicheradresse benutzt.

4. Vorrichtung nach Anspruch 1, wobei in der Phasenverschiebungs-Lookup-Tabelle (202a) ein Phasenwert $\theta(n)$ bestimmt ist durch $\theta(n) = \tan^{-1}\left(\frac{Q(n)}{I(n)}\right)$, wobei I(n) die digitalen Inphasedaten der Amplituden-Abtast-Daten und Q(n) die digitalen Quadratur-Daten der Amplituden-Abtast-Daten darstellen.

5. Vorrichtung nach Anspruch 1, wobei in der Amplituden-Wandlungs-Lookup-Tabelle (204a) ein Amplitudenwert einen Inphasewert I(n) und einen Quadraturwert Q(n) umfasst, und wobei die Phasendaten durch I(n)=A(n)cos($\theta$(n)) und Q(n)=A(n)sin($\theta$)(n)) in Amplitudenwerte I(n) und Q(n) umgewandelt werden.

6. Vorrichtung nach Anspruch 5, wobei A(n) auf einen festen Wert festgelegt ist.

7. Vorrichtung nach Anspruch 1, wobei ein Zwischenraum zwischen den zweiten approximierten Ganzzahlen, die in der Amplituden-Wandlungs-Lookup-Tabelle (204a) gespeichert sind, in Abhängigkeit von der Anzahl Bits der Amplitudendaten bestimmt ist.

8. Vorrichtung nach Anspruch 1, wobei die Amplituden-Wandlungs-Lookup-Tabelle (204a) die vom Phasenschieber (202) ausgebbaren Phasendaten als eine Speicheradresse benutzt.

9. Vorrichtung nach Anspruch 1, wobei eine Ausgangsspannung der Phasendifferenzdetektionsvorrichtung (206) proportional einer Phasendifferenz zwischen dem Inphase-Frequenzsignal und dem Quadratur-Frequenzsignal ist.

10. Signalverarbeitungsverfahren, aufweisend:

Umwandeln, mit einem A/D-Wandler, eines Inphase-Frequenzsignals und eines Quadratur-Frequenzsignals in Amplituden-Abtast-Daten einschließlich digitaler Inphasedaten und digitaler Quadraturdaten;
Umwandeln der vom A/D-Wandler (201) eingegebenen Phasendaten Amplituden-Abtast-Daten in Phasendaten durch Bezugnahme auf die Phasenverschiebungs-Lookup-Tabelle (202a), die alle vom A/D-Wandler ausgebbaren Amplituden-Abtast-Daten in Phasendaten umwandelt und die Phasendaten in erste approximierte Ganzzahlen approximiert und danach die ersten approximierten Ganzzahlen in Phasendaten von im Voraus bestimmten Bits umwandelt und die Phasendaten speichert;
Speichern der Phasendaten in einem Phasendatenspeicher (203);
Umwandeln der im Phasendatenspeicher (203) gespeicherten Phasendaten in Amplitudendaten durch Anwenden einer Amplituden-Wandlungs-Lookup-Tabelle (204a), die alle vom Phasenschieber ausgebbaren Phasendaten in Amplitudenwerte umwandelt und die Amplitudenwerte in zweite approximierte Ganzzahlen approximiert, und die zweiten approximierten Ganzzahlen in Amplitudendaten einschließlich digitaler Inphase-Daten und digitaler Quadratur-Daten umwandelt und die Amplitudendaten speichert; und
Umwandeln der Amplitudendaten in ein Inphase-Frequenzsignal und ein Quadratur-Frequenzsignal,
wobei das Verfahren ferner vor dem Speichern der Phasendaten im Phasendatenspeicher (203) Folgendes aufweist:

Ausgeben einer Phasendifferenz zwischen dem Inphase-Frequenzsignal und dem Quadratur-Frequenzsignal durch Empfangen des Inphase-Frequenzsignals und des Quadratur-Frequenzsignals zum Umwandeln der Amplituden-Abtast-Daten;
Umwandeln und Ausgeben der Phasendifferenz in eine digitale Phasendifferenz; und
Erfassen eines Phasenfehlers in Abhängigkeit von der digitalen Phasendifferenz,
wobei ein Phasendatenwert einschließlich des Phasenfehlers beim Speichern der Phasendaten gespeichert wird.

## Revendications

1. Appareil de traitement de signal, comprenant :

un convertisseur analogique-numérique, A/D, (201) convertissant un signal de fréquence en phase et un signal de fréquence en quadrature en données d'échantillonnage d'amplitude comprenant des données en phase numériques et des données en quadrature numériques ;

un déphaseur (202) comprenant une table de consultation de déphasage (202a) qui convertit toutes les données d'échantillonnage d'amplitude pouvant être délivrées par le convertisseur A/D (201) en valeurs de phase et qui approxime les valeurs de phase en premiers nombres entiers approximés, puis convertit les premiers nombres entiers approximés en données de phase de bits prédéterminés et mémorise les données de phase, et convertissant les données d'échantillonnage d'amplitude entrées par le convertisseur A/D en données de phase en faisant référence à la table de consultation de déphasage (202a) ;

un détecteur de différence de phase (206) recevant le signal de fréquence en phase et le signal de fréquence en quadrature entrés dans le convertisseur A/D (201) et délivrant la différence de phase entre le signal de fréquence en phase et le signal de fréquence en quadrature ;

un deuxième convertisseur A/D (207) convertissant et délivrant la différence de phase délivrée par le détecteur de différence de phase (206) en une différence de phase numérique ; et

une table de consultation d'erreur de phase (208) mémorisant une erreur de phase en fonction de la différence de phase numérique délivrée par le deuxième convertisseur A/D (207) ;

une mémoire de données de phase (203) mémorisant les données de phase délivrées par le déphaseur (202), dans lequel les données de phase mémorisées dans la mémoire de données de phase (203) comprennent l'erreur de phase ;

un convertisseur d'amplitude (204) comprenant une table de consultation de conversion (204a) qui convertit toutes les données de phase pouvant être délivrées par le déphaseur (202) en valeurs d'amplitude et qui approxime les valeurs de phase en deuxièmes nombres entiers approximés, puis convertit les deuxièmes nombres entiers approximés en données d'amplitude comprenant des données en phase numériques et des données en quadrature numériques et mémorise les données d'amplitude, et convertissant les données de phase mémorisées dans la mémoire de données de phase (203) en données d'amplitude en faisant référence à la table de consultation de conversion d'amplitude (204a) ; et

un convertisseur numérique-analogique, D/A, (205) convertissant les données d'amplitude délivrées par le convertisseur d'amplitude en un signal de fréquence en phase et un signal de fréquence en quadrature.

2. Appareil selon la revendication 1, dans lequel un espacement entre les premiers nombres entiers approximés mémorisés dans la table de consultation de déphasage (202a) est déterminé en fonction du nombre de bits des données de phase.

3. Appareil selon la revendication 1, dans lequel la table de consultation de déphasage (202a) utilise les données d'échantillonnage d'amplitude comprenant les données en phase numériques et les données en quadrature numériques en tant qu'adresse de mémorisation.

4. Appareil selon la revendication 1, dans lequel, dans la table de consultation de déphasage (202a), une valeur de phase $\theta(n)$ est déterminée par :

$$\theta(n) = tan^{-1}\left(\frac{Q(n)}{I(n)}\right)$$

où I(n) représente les données en phase numériques des données d'échantillonnage d'amplitude et Q(n) représente les données en quadrature numériques des données d'échantillonnage d'amplitude.

5. Appareil selon la revendication 1, dans lequel, dans la table de consultation de conversion d'amplitude (204a), une valeur d'amplitude comprend une valeur en phase I(n) et une valeur en quadrature Q(n) et les données de phase sont converties en valeurs d'amplitude I (n) et Q(n) par I(n) = A(n) cos($\theta$(n)) et Q(n) = A(n) sin($\theta$(n)).

6. Appareil selon la revendication 5, dans lequel A(n) est réglé à une valeur fixe.

7. Appareil selon la revendication 1, dans lequel un espacement entre les deuxièmes nombres entiers approximés mémorisés dans la table de consultation de conversion d'amplitude (204a) est déterminé en fonction du nombre de bits des données d'amplitude.

8. Appareil selon la revendication 1, dans lequel la table de consultation de conversion d'amplitude (204a) utilise les données de phase pouvant être délivrées par le déphaseur (202) en tant qu'adresse de mémorisation.

EP 2 385 674 B1

**9.** Appareil selon la revendication 1, dans lequel une tension de sortie du détecteur de différence de phase (206) est en proportion d'une différence de phase entre le signal de fréquence en phase et le signal de fréquence en quadrature.

**10.** Procédé de traitement de signal, comprenant :

la conversion, par un convertisseur analogique-numérique, A/D, d'un signal de fréquence en phase et d'un signal de fréquence en quadrature en données d'échantillonnage d'amplitude comprenant des données en phase numériques et des données en quadrature numériques ;
la conversion des données d'échantillonnage d'amplitude entrées par le convertisseur A/D (201) en données de phase en faisant référence à une table de consultation de déphasage (202a) qui convertit toutes les données d'échantillonnage d'amplitude pouvant être délivrées par le convertisseur A/D en valeurs de phase et qui approxime les valeurs de phase en premiers nombres entiers approximés, puis convertit les premiers nombres entiers approximés en données de phase de bits prédéterminés et mémorise les données de phase ;
la mémorisation des données de phase dans une mémoire de données de phase (203) ;
la conversion des données de phase mémorisées dans la mémoire de données de phase (203) en données d'amplitude en utilisant une table de consultation de conversion d'amplitude (204a) qui convertit toutes les données de phase pouvant être délivrées par le déphaseur en valeurs d'amplitude et qui approxime les valeurs d'amplitude en deuxièmes nombres entiers approximés, et convertit les deuxièmes nombres entiers approximés en données d'amplitude comprenant des données en phase numériques et des données en quadrature numériques et mémorise les données d'amplitude ; et
la conversion des données d'amplitude en un signal de fréquence en phase et un signal de fréquence en quadrature,
dans lequel ledit procédé comprend en outre, avant la mémorisation des données de phase dans la mémoire de données de phase (203) :

la délivrance d'une différence de phase entre le signal de fréquence en phase et le signal de fréquence en quadrature par la réception du signal de fréquence en phase et du signal de fréquence en quadrature pour la conversion des données d'échantillonnage d'amplitude ;
la conversion et la délivrance de la différence de phase en une différence de phase numérique ; et
l'acquisition d'une erreur de phase en fonction de la différence de phase numérique,
dans lequel une valeur de données de phase comprenant l'erreur de phase est mémorisée à la mémorisation des données de phase.

[FIG.1]

FIRST A/D CONVERTING UNIT — 101a
SECOND A/D CONVERTING UNIT — 101b
101

PHASE SHIFTER — 102
PHASE SHIFT LOOKUP TABLE — 102a

PHASE DATA MEMORY — 103

AMPLITUDE CONVERTER — 104
AMPLITUDE CONVERSION LOOKUP TABLE — 104a

PLD

FIRST D/A CONVERTING UNIT — 105a
SECOND D/A CONVERTING UNIT — 105b
105

[FIG.2]

| AMPLITUDE SAMPLING DATA | | ADDRESS | PHASE [°] | APPROXIMATE PHASE [°] | PHASE DATA |
|---|---|---|---|---|---|
| I | Q | | | | |
| 0 | 0 | 00 | −135 | −135 | 1 |
| 0 | 1 | 01 | −161.565 | −180 | 0 |
| 0 | 2 | 02 | 161.5651 | 180 | 0 |
| 0 | 3 | 03 | 135 | 135 | 7 |
| 1 | 0 | 10 | −108.435 | −90 | 2 |
| 1 | 1 | 11 | −135 | −135 | 1 |
| 1 | 2 | 12 | 135 | 135 | 6 |
| 1 | 3 | 13 | 108.4349 | 90 | 6 |
| 2 | 0 | 20 | −71.5651 | −90 | 2 |
| 2 | 1 | 21 | −45 | −45 | 3 |
| 2 | 2 | 22 | 45 | 45 | 5 |
| 2 | 3 | 23 | 71.56505 | 90 | 6 |
| 3 | 0 | 30 | −45 | −45 | 3 |
| 3 | 1 | 31 | −18.43495 | 0 | 4 |
| 3 | 2 | 32 | −18.43495 | 0 | 4 |
| 3 | 3 | 33 | 45 | 45 | 5 |

[FIG.3]

| APPROXIMATE PHASE [°] | PHASE DATA |
|---|---|
| −180 | 0 |
| −135 | 1 |
| −90 | 2 |
| −45 | 3 |
| 0 | 4 |
| 45 | 5 |
| 90 | 6 |
| 135 | 7 |

[FIG.4]

[FIG.5]

| ADDRESS (= PHASE DATA) | PHASE [°] | Iout | Qout | Iout [mV] | Qout [mV] | APPROXIMATE I [mV] | APPROXIMATE Q [mV] | AMPLITUDE DATA | |
|---|---|---|---|---|---|---|---|---|---|
| | | | | | | | | I DIGITAL VALUE | I DIGITAL VALUE |
| 0 | −180 | −1.0 | 0.0 | −225.0 | 0.0 | −225 | −75 | 0 | 1 |
| 1 | −135 | −7.0 | −7.0 | −159.1 | −159.1 | −225 | −225 | 0 | 0 |
| 2 | −90 | 0.0 | −1.0 | 0.0 | −225.0 | −75 | −225 | 1 | 0 |
| 3 | −45 | 0.7 | −7.0 | 159.1 | −159.1 | 225 | −225 | 3 | 0 |
| 4 | 0 | 1.0 | 0.0 | 225.0 | 0.0 | 225 | −75 | 3 | 1 |
| 5 | 45 | 0.7 | 0.7 | 159.1 | 159.1 | 225 | 225 | 3 | 3 |
| 6 | 90 | 0.0 | 1.0 | 0.0 | 225.0 | −75 | 225 | 1 | 3 |
| 7 | 135 | −0.7 | 0.7 | −159.1 | 159.1 | −225 | 225 | 0 | 3 |

[FIG.6]

| APPROXIMATE I,Q[mV] | I,Q DIGITAL VALUE |
|---|---|
| 225 | 3 |
| 75 | 2 |
| -75 | 1 |
| -225 | 0 |

[FIG.7]

[FIG.8]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6624780 B
- US 5001727 A